# EUROPÄISCHE PATENTSCHRIFT

(11) **EP 0 573 864 B1**
(45) Veröffentlichungstag und Bekanntmachung des Hinweises auf die Patenterteilung: **01.10.1997**
(21) Anmeldenummer: 93108726.6
(22) Anmeldetag: 29.05.1993
(51) Int. Cl.: C08G 77/38, C08G 77/46

(54) **Verfahren zur Herstellung von Polyethersiloxanen**
Process for the preparation of polyether siloxanes
Procédé de préparation de polyéthersiloxanes

(30) Priorität: 11.06.1992 DE 4219070
(43) Veröffentlichungstag der Anmeldung: 15.12.1993
(73) Patentinhaber: Th. Goldschmidt AG, 45127 Essen (DE)
(72) Erfinder: Burkhart, Georg, Dr., W-4300 Essen 16 (DE); Schaefer, Dietmar, Dr., W-4320 Hattingen 16 (DE); Weier, Andreas, Dr., W-4300 Essen 1 (DE); Wewers, Dietmar, Dr., W-4250 Bottrop (DE)

(56) Entgegenhaltungen:
- EP-A- 0 485 637
- EP-A- 0 499 051
- US-A- 5 175 327

## Beschreibung

Die Erfindung betrifft ein Verfahren zur Herstellung von Polyethersiloxanen, die frei von überschüssigen Polyethern sind und deren Polyetherreste durch Si-C-Bindungen an das Polysiloxangerüst gebunden sind.

Bei der Herstellung von Polyethersiloxanen durch Umsetzung von Chlorpolysiloxanen mit Polyetherdiolen ist man gezwungen, einen Überschuß an Polyetherdiolen, gemessen an dem molaren Verhältnis von OH-Gruppen zu SiCl-Gruppen, einzusetzen, um die Bildung von A[ BA ]ₓ -Polymeren oder vernetzten Polymeren zu vermeiden. Es ist jedoch in den meisten Fällen nicht möglich, das überschüssige Polyetherdiol aus dem Reaktionsgemisch zu entfernen. Eine destillative Abtrennung scheitert im allgemeinen an dem hohen Molekulargewicht des Polyetherdiols und dessen hierdurch bedingte physikalische Eigenschaften. Eine selektive Abtrennung des Polyetherdiols durch Auswaschen ist wirtschaftlich nicht durchführbar und ist häufig wegen der tensidischen Eigenschaften des Polyethersiloxans nicht möglich.

Lagert man Polyether mit einer olefinischen Doppelbindung, wie z.B. Allylpolyether, an Wasserstoffsiloxane an, ist es ebenfalls notwendig, mit einem Überschuß an Polyether zu arbeiten, da ein Teil des Polyethers sich der Anlagerung durch Isomerisierung entzieht und die Anlagerung nur in Gegenwart überschüssiger Mengen Polyether in wirtschaftlich vertretbarer Zeit in bezug auf die SiH-Gruppen quantitativ abläuft. Auch bei einer solchen Verfahrensweise besteht das Problem der Abtrennung der isomerisierten oder überschüssigen, nicht umgesetzten Mengen Allylpolyether.

Aus der EP-A-0 485 637 ist ein Verfahren zur Herstellung von Polyethersiloxanen bekannt, das die Umsetzung von Polysiloxanen, die mindestens eine 0H-Gruppe im Molekül enthalten, mit einer eine Epoxidgruppe enthaltenden Verbindung in Gegenwart eines Cyanid-Komplex-Katalysators zum Inhalt hat.

Die vorliegende Erfindung befaßt sich mit dem technischen Problem der Herstellung von Polyethersiloxanen definierter Funktionalität in möglichst reiner, d.h. von überschüssigen, nicht umgesetzten Polyolkomponenten freier Form.

Dieses Problem wird durch das erfindungsgemäße Verfahren gelöst, welches dadurch gekennzeichnet ist, daß man Polysiloxane der allgemeinen durchschnittlichen Formel 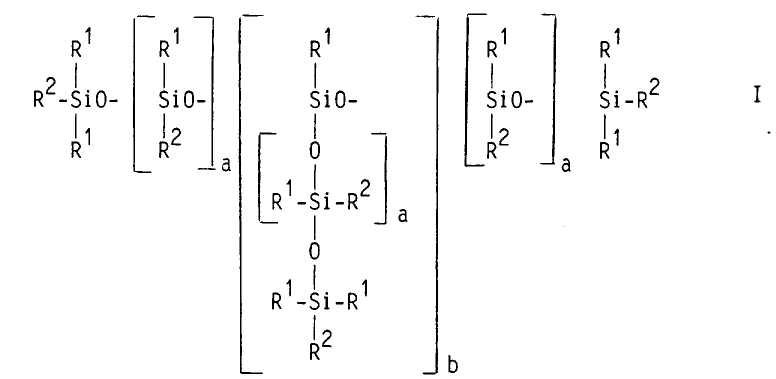 in der die Reste
- R¹: gleich oder verschieden sind und Alkylreste mit 1 bis 4 Kohlenstoffatomen oder Phenylreste bedeuten, mindestens 90 % der Reste R¹ aber Methylreste sind,
- R²: die Bedeutung der Reste R¹ haben können, aber mindestens ein Rest R² ein Rest der allgemeinen Formel 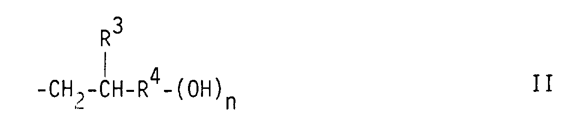 ist, in der
R³ ein Wasserstoff- oder ein Alkylrest mit 1 bis 4 Kohlenstoffatomen ist,
R⁴ ein (n+1)-wertiger aliphatischer Kohlenwasserstoff- oder Etherrest ist, und
n einen Wert von 1, 2 oder 3 hat,
- a: einen Wert von 1 bis 1000 und
- b: einen Wert von 0 bis 10 hat,
mit einer mindestens eine Epoxidgruppe aufweisenden Verbindung in solchen Mengen, daß auf eine OH-Gruppe mindestens zwei Epoxidgruppen entfallen, in Gegenwart von Lewis-Säuren bei Temperaturen von ≦ 60°C umsetzt und die Umsetzung gegebenenfalls in Gegenwart eines inerten Lösungsmittels durchführt.

In der Formel I können die Reste R¹ gleich oder verschieden sein. Sie sind Alkylreste mit 1 bis 4 Kohlenstoffatomen oder Phenylreste. Es muß jedoch die Bedingung erfüllt sein, daß mindestens 90 % der Reste R¹ Methylreste sind.

Die Reste R² können ebenfalls innerhalb des polymeren Moleküls gleich oder verschieden sein und die Bedeutung der Reste R¹ annehmen. Mindestens ein Rest R² muß aber ein Rest der allgemeinen Formel II 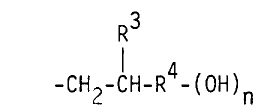 sein. In dieser Formel II hat R³ die Bedeutung eines Wasserstoff-oder eines Alkylrestes mit 1 bis 4 Kohlenstoffatomen. Vorzugsweise ist R³ ein Wasserstoffrest. R⁴ ist ein Brückenglied, welches den Kohlenstoff der CHR³-Gruppe mit einer oder mehreren OH-Gruppen verbindet. R⁴ ist somit ein (n+1)-wertiger aliphatischer Kohlenwasserstoffrest, dessen Kohlenstoffkette durch ein Sauerstoffatom unterbrochen sein kann und dann die Bedeutung eines Etherrestes annimmt. n hat einen Wert von 1, 2 oder 3.

Der Rest R² ist vorzugsweise ein Rest der Formel -(CH₂)ₓ-OH, wobei x einen Wert von 2 bis 6 aufweist. Besonders bevorzugt sind als Reste R² die Reste -(CH₂)₃-OH und -(CH₂)₃-O-C₂H₄OH.

Der Index a kennzeichnet den Gehalt an difunktionellen 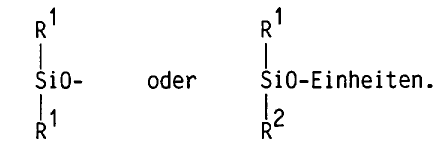 Dabei hat a einen Wert von 1 bis 1000. b kennzeichnet die Anzahl der Einheiten mit einer trifunktionellen Siloxyeinheit, wobei b einen Wert von 0 bis 10 hat.

Es ergibt sich somit, daß das durchschnittliche Molekül bei einem Wert von b = 0 mindestens 4 Si-Atome aufweist. Dabei ist zu beachten, daß es sich bei dieser Formel um eine allgemeine durchschnittliche Formel handelt, die die durchschnittliche Struktur und Zusammensetzung des Polyethersiloxans kennzeichnet.

Bei dem erfindungsgemäßen Verfahren wird nun ein Polysiloxan der Formel I mit einer Verbindung umgesetzt, welche mindestens eine Epoxidgruppe aufweist, wobei auf jede OH-Gruppe des Restes der Formel II mindestens zwei Epoxidgruppen entfallen müssen.

Als Verbindungen mit Epoxidgruppen kommen zunächst Ethylenoxid, Propylenoxid und Butylenoxid in Frage. Diese können jeweils alleine oder in Form eines Gemisches oder blockweise an die OH-Gruppe des Restes R² angelagert werden. Unter diesen Epoxiden sind Ethylenoxid und Propylenoxid bevorzugt.

Weitere geeignete und mit Vorteil einzusetzende Epoxide sind die cycloaliphatischen Epoxide. Beispiele geeigneter cycloaliphatischer Epoxide sind Cyclohexenoxid, Vinylcyclohexenoxid, Limonenoxid, Cyclopentenoxid und Cyclododecenoxid, wobei Vinylcyclohexenoxid und Limonenoxid besonders bevorzugt sind.

Ein besonderer Vorteil des erfindungsgemäßen Verfahrens besteht darin, daß man als Epoxide auch Epoxyalkene oder Epoxyalkenether verwenden kann. Man erhält bei der Anlagerung dieser Epoxyverbindungen Polyethersiloxane, welche in der Polyetherkette seitenständig gebundene olefinische Doppelbindungen aufweisen. Bei Verwendung eines Epoxyalkens der allgemeinen Form 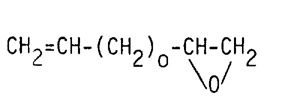 wobei o eine Zahl von 0 bis 8 ist, erhält man Polysiloxane, welche an einem oder mehreren Si-Atomen z.B. die folgende Polyethergruppierung enthalten:

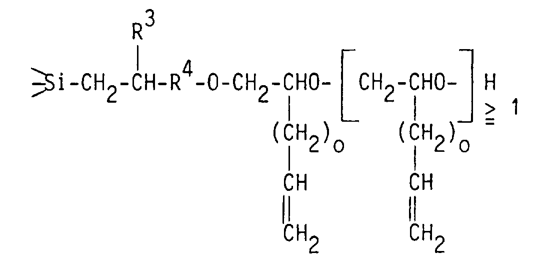

Verbindungen dieser Art waren nach den bisher bekannten Methoden nicht herstellbar. Sie haben den großen Vorteil, aufgrund der olefinischen Doppelbindung weiteren Reaktionen zugänglich zu sein. So ist es möglich, derartige Polyethersiloxane mit Vinyl- oder (Meth)acrylmonomeren zu copolymerisieren. Sie können auch zur Modifizierung von Epoxiden dienen.

Anstelle der Epoxyalkene können auch Epoxyalkenether der allgemeinen Formel 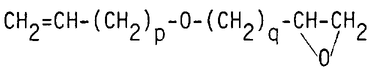 eingesetzt werden. In dieser Formel ist p eine Zahl von 0 bis 4 und q eine Zahl von 1 bis 4. Bevorzugtes Beispiel eines Epoxyalkenethers ist der Allylglycidether.

Die Umsetzung der Polysiloxane der Formel I mit den Verbindungen mit Epoxidgruppen erfolgt in Gegenwart von Lewis-Säuren als Katalysatoren. In diesem Falle ist eine Temperatur von ≦ 60°C einzuhalten, da sich bei höheren Temperaturen Spaltungs und Äquilibrierungsreaktionen am Polysiloxangerüst störend bemerkbar machen.

Beispiel einer besonders geeigneten Lewis-Säure ist BF₃. Weitere geeignete Lewis-Säuren sind AlCl₃, SnCl₄, Bis(1-methoxy-2-propoxy)zink.

Es kann ferner von Vorteil sein, die Umsetzung in Gegenwart eines Lösungsmittels durchzuführen. Das Lösungsmittel muß jedoch gegenüber den Reaktionspartnern inert sein. Im Falle der Verwendung von Lewis-Säuren und insbesondere von BF₃ ist Tetrahydrofuran als Lösungsmittel ungeeignet, da es aufgespalten und in erheblichen Anteilen in die Polyethergruppe eingebaut wird. Geeignete Lösungsmittel sind Dimethoxyethan, Toluol, Diethylenglykoldimethylether.

Die nach dem erfindungsgemäßen Verfahren hergestellten Polyethersiloxane können für die gleichen Verwendungszwecke, wie die aus dem Stand der Technik bekannten Polyethersiloxane, eingesetzt werden. Dabei ist ein bevorzugter Verwendungszweck die Verwendung dieser Verbindungen als Stabilisatoren bei der Polyurethanverschäumung. Die Verbindungen weisen herstellungsbedingt jedoch den Vorteil auf, daß sie frei von nicht umgesetzten Polyethermono- oder -diolen sind, welche z.B. bei der Herstellung von Polyurethanschäumen mit Isocyanaten reagieren würden. Wie bereits ausgeführt, eignen sich die Polyethersiloxane, welche im Polyetherrest noch mindestens eine olefinische Doppelbindung aufweisen, als Makromonomere und sind einer Copolymerisation zugängliche Verbindungen. Sie können deshalb zur Modifizierung von Polymeren verwendet werden. Es ist außerdem möglich, die dem Chemiker geläufigen Reaktionen mit der olefinischen Doppelbindung durchzuführen, wie z.B. die Additionsreaktionen. Beispiel einer solchen Reaktion ist die Umsetzung mit Natriumhydrogensulfit.

In den folgenden Beispielen wird das erfindungsgemäße Verfahren noch näher erläutert, und es werden die Eigenschaften der erhaltenen Verbindungen gezeigt.

### Beispiel 1

Zu einer Mischung von 92,6 g (0,1 Mol) eines über Si-C-Gruppen gebundene Hydroxygruppen enthaltenden Siloxans der durchschnittlichen Formel 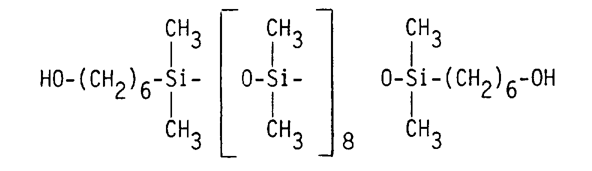 und 20 ml Toluol werden 0,5 ml Bortrifluorid als 48 %ige Mischung in Diethylether zugegeben. Dann werden 46,4 g (0,8 Mol) Propylenoxid langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/ 0,133 mbar (0,1 Torr) liefert 133 g (96 % d. Th.) eines mittelviskosen Öls, bei dem es sich laut spektroskopischer Daten um einen Silikonpolyether der durchschnittlichen Formel 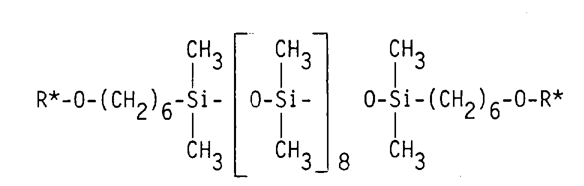 R∗ = 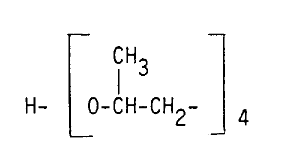 handelt.

### Beispiel 2

Zu einer Mischung von 92,6 g (0,1 Mol) eines über Si-C-Gruppen gebundene Hydroxygruppen enthaltenden Siloxans der durchschnittlichen Formel 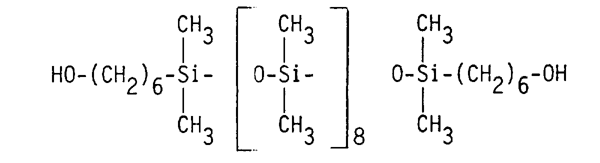 und 20 ml Toluol werden 0,5 ml Bortrifluorid als 48 %ige Mischung in Diethylether zugegeben. Dann werden 91,2 g (0,8 Mol) Allylglycidether langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/ 0,133 mbar (0,1 Torr) liefert 171 g (93 % d. Th.) eines mittelviskosen Öls, bei dem es sich laut spektroskopischer Daten um einen Silikonpolyether der durchschnittlichen Formel 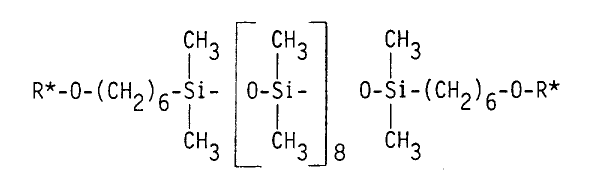 R∗ = 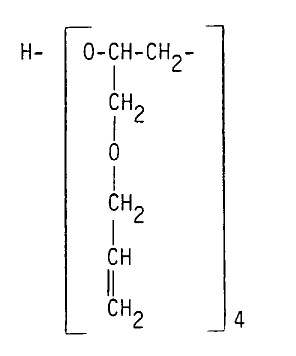 handelt.

### Beispiel 3

Zu einer Mischung von 92,6 g (0,1 Mol) eines über Si-C-Gruppen gebundene Hydroxygruppen enthaltenden Siloxans der durchschnittlichen Formel 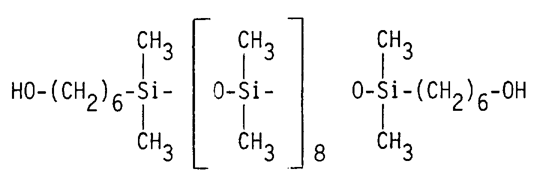 und 20 ml Toluol werden 0,5 ml Bortrifluorid als 48 %ige Mischung in Diethylether zugegeben. Dann werden 116 g (2,0 Mol) Propylenoxid und 88 g (2,0 Mol) Ethylenoxid als Gemisch langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/0,133 mbar (0,1 Torr) liefert 282 g (95 % d. Th.) eines mittelviskosen Öls, bei dem es sich laut spektroskopischer Daten um einen Silikonpolyether der durchschnittlichen Formel 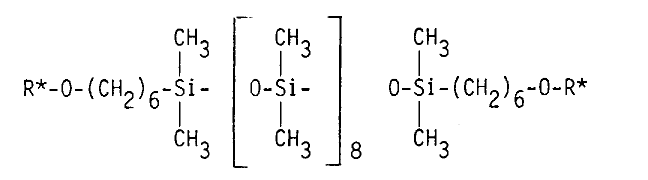 R* = 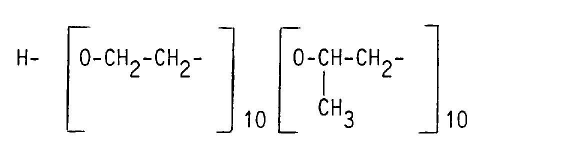 handelt.

### Beispiel 4

Zu einer Mischung von 92,6 g (0,1 Mol) eines über Si-C-Gruppen gebundene Hydroxygruppen enthaltenden Siloxans der durchschnittlichen Formel 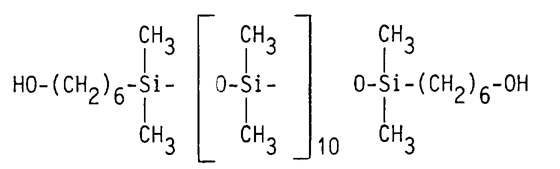 und 20 ml Toluol werden 0,5 ml Bortrifluorid als 48 %ige Mischung in Diethylether zugegeben. Dann werden 124 g (1,0 Mol) Vinylcyclohexenoxid langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/ 0,133 mbar (0,1 Torr) liefert 210 g (97 % d. Th.) eines mittelviskosen Öls, bei dem es sich laut spektroskopischer Daten um einen Silikonpolyether der durchschnittlichen Formel 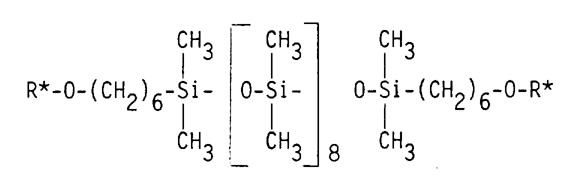 R∗ = 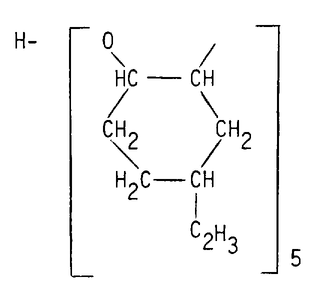 handelt.

### Beispiel 5

Zu einer Mischung von 84,2 g (0,1 Mol) eines über Si-C-Gruppen gebundene Hydroxygruppen enthaltenden Siloxans der durchschnittlichen Formel 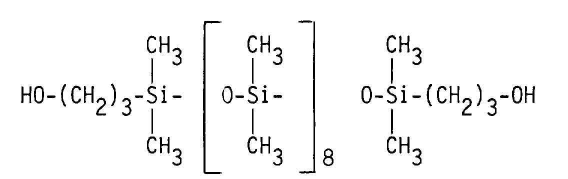 und 20 ml Toluol werden 0,5 ml Bortrifluorid als 48 %ige Mischung in Diethylether zugegeben. Dann werden 121,8 g (0,8 Mol) Limonenoxid langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/ 0,133 mbar (0,1 Torr) liefert 190 g (92 % d. Th.) eines mittelviskosen Öls, bei dem es sich laut spektroskopischer Daten um einen Silikonpolyether der durchschnittlichen Formel 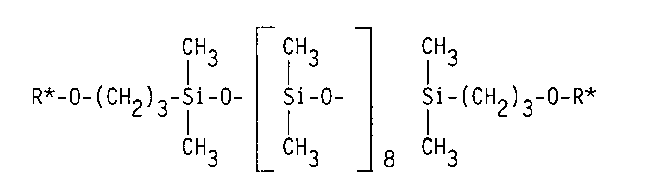 R* = 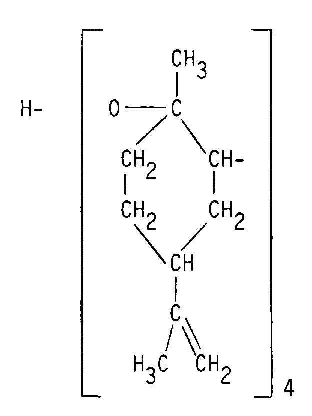 handelt.

### Beispiel 6

Zu einer Mischung von 236 g (0,05 Mol) eines über Si-C-Gruppen gebundene Hydroxygruppen enthaltenden Siloxans der durchschnittlichen Formel 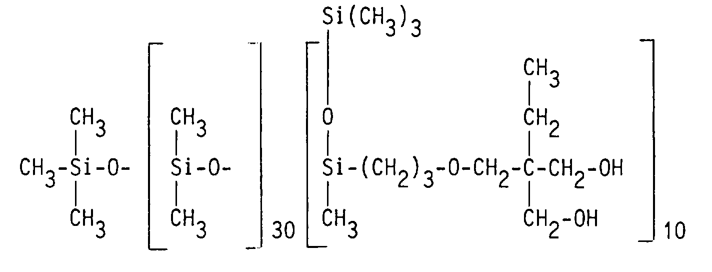 mit 40 ml Dimethoxyethan und 0,1 g eines Zinkhexacyanokobaltatkomplexes werden in einem Druckgefäß bei 120°C 290 g (5,0 Mol) Propylenoxid zugetropft. Nach Beendigung der Reaktion werden weitere 228 g (2,0 Mol) Allylglycidether zugegeben. Dann wird noch 1 h bei 130°C gerührt. Filtration und Abziehen der flüchtigen Reaktionsprodukte bei 120°C/0,133 mbar (0,1 Torr) liefert 686 g (91 % d. Th.) eines Öls, bei dem es sich laut spektroskopischer Daten um einen Silikonpolyether der durchschnittlichen Formel 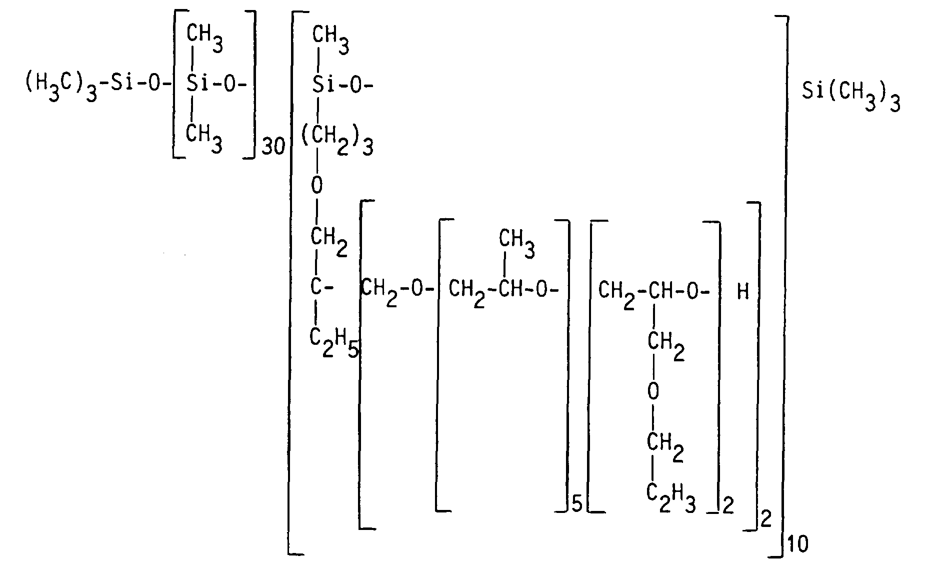 handelt.

### Beispiel 7

Zu einer Mischung von 416 g (0,1 Mol) eines über Si-C-Gruppen gebundene Hydroxygruppen enthaltenden Siloxans der durchschnittlichen Formel 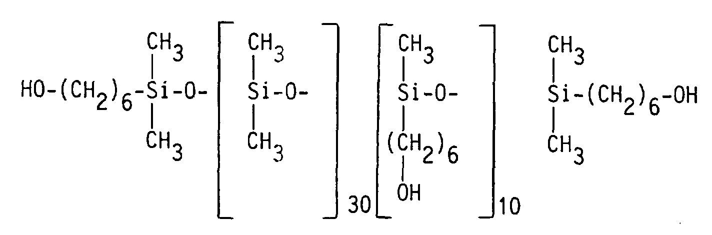 und 100 ml Toluol wird 1 ml Bortrifluorid als 48 %ige Mischung in Diethylether zugegeben. Dann werden 446,4 g (3,6 Mol) Vinylcyclohexenoxid langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/ 0,133 mbar (0,1 Torr) liefert 810 g (94 % d. Th.) eines mittelviskosen Öls, bei dem es sich laut spektroskopischer Daten um einen Silikonpolyether der durchschnittlichen Formel 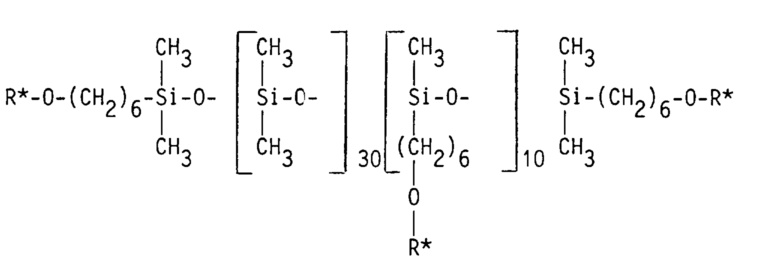 R* = 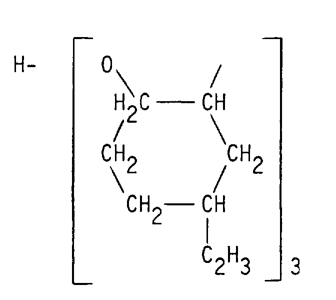 handelt.

### Beispiel 8

Zu einer Mischung von 92,6 g (0,1 Mol) eines über Si-C-Gruppen gebundene Hydroxygruppen enthaltenden Siloxans der durchschnittlichen Formel 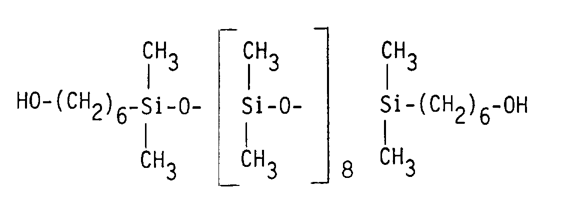 und 20 ml Toluol werden 0,5 ml Bortrifluorid als 48 %ige Mischung in Diethylether zugegeben. Dann werden 152 g (1,0 Mol) Limonenoxid und 120 g (0,5 Mol) 1,2-Hexadecenoxid im Gemisch langsam zugetropft, so daß die Temperatur der Reaktionsmischung 60°C nicht überschreitet. Nach Beendigung der Zugabe wird noch 1/2 h gerührt, dann mit Wasser und Natriumhydrogencarbonat neutralisiert. Filtration und Abziehen der flüchtigen Reaktionsprodukte bei 120°C/0,133 mbar (0,1 Torr) liefert 365 g (97 % d. Th.) eines Öls, bei dem es sich laut spektroskopischer Daten um einen Silikonpolyether der durchschnittlichen Formel 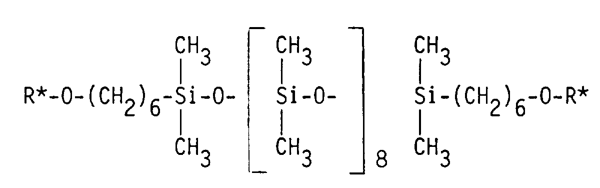 R* = 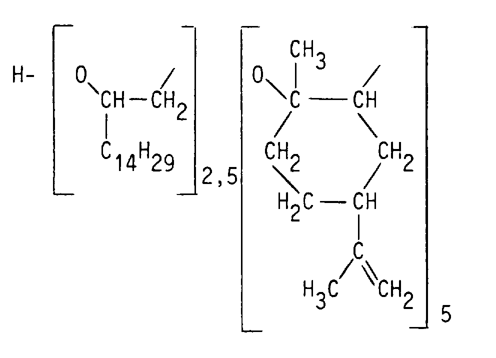 handelt.

### Anwendungstechnische Prüfungen

Zur anwendungstechnischen Prüfung werden die erhaltenen Silikonpolyether einem selbsthärtenden Lacksystem in einer Konzentration von 1 % beigemischt und die Mischung mit einem 40-µm-Drahtrakel auf Bonder-Stahlblech aufgetragen. Nach einer Aushärtezeit von 48 h wird der Lack durch einen Abzugstest mit Tesa® 4154 auf sein Release-Verhalten überprüft (Test 1).

Ein Maß für die Kratzfestigkeit der erhaltenen Lacke ist die Zugkraft, die nötig ist, um einen 500 g schweren Probenkörper, der auf drei Schrauben ruht, mit 30 cm/min über den Lack zu ziehen (Test 2).

Die schaumstabilisierenden Eigenschaften der entstandenen Silikonpolyether werden in einer Weichschaumformulierung mit 100 Teilen eines Polyetherpolyols, 4,0 Teilen Wasser, 0,1 Teilen eines tertiären Aminkatalysators, 0,1 Teilen Zinnoktoat und 0,5 Teilen eines Schaumstabilisators getestet. Dafür werden jeweils 0,5 Teile der zu testenden Substanz zu der Formulierung zugemischt und die Steighöhe des Schaumes gemessen (Test 3).

| | Test 1 | Test 2 | Test 3 |
|---|---|---|---|
| keine Zugabe | 11,6 N | 3,5 N | 31,1 cm |
| Substanz aus Beispiel 1 | 6,4 N | 1,8 N | Kollaps |
| Substanz aus Beispiel 2 | 7,1 N | 2,3 N | Kollaps |
| Substanz aus Beispiel 3 | 6,2 N | 1,6 N | 23,2 cm |
| Substanz aus Beispiel 4 | 5,9 N | 1,9 N | Kollaps |
| Substanz aus Beispiel 5 | 5,9 N | 2,1 N | Kollaps |
| Substanz aus Beispiel 6 | 9,7 N | 3,2 N | 32,6 cm |
| Substanz aus Beispiel 7 | 8,5 N | 2,7 N | 31,7 cm |
| Substanz aus Beispiel 8 | 5,1 N | 1,4 N | Kollaps |

## Patentansprüche

1. Verfahren zur Herstellung von Polyethersiloxanen, deren Polyetherreste durch Si-C-Bindungen an das Polysiloxangerüst gebunden sind, dadurch gekennzeichnet, daß man Polysiloxane der allgemeinen durchschnittlichen Formel 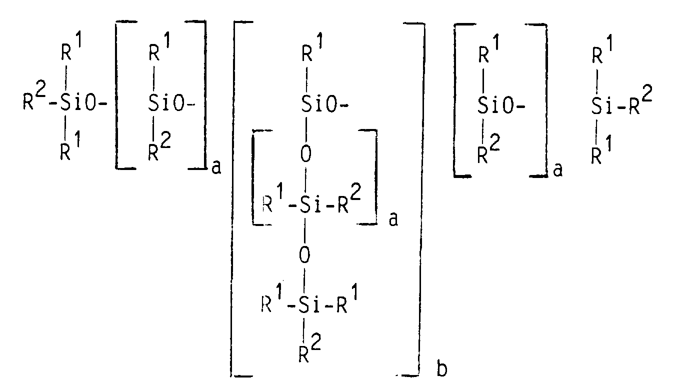 in der die Reste
R¹ gleich oder verschieden sind und Alkylreste mit 1 bis 4 Kohlenstoffatomen oder Phenylreste bedeuten, mindestens 90 % der Reste R¹ aber Methylreste sind,
R² die Bedeutung der Reste R¹ haben können, aber mindestens ein Rest R² ein Rest der allgemeinen Formel 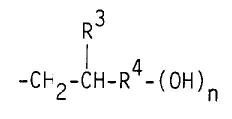 ist, in der
R³ ein Wasserstoff- oder ein Alkylrest mit 1 bis 4 Kohlenstoffatomen ist,
R⁴ ein (n+1)-wertiger aliphatischer Kohlenwasserstoff- oder Etherrest ist, und
n einen Wert von 1, 2 oder 3 hat,
a einen Wert von 1 bis 1000 und
b einen Wert von 0 bis 10 hat,
mit einer mindestens eine Epoxidgruppe aufweisenden Verbindung in solchen Mengen, daß auf eine OH-Gruppe mindestens zwei Epoxidgruppen entfallen, in Gegenwart von Lewis-Säuren bei Temperaturen von ≦ 60°C umsetzt und die Umsetzung gegebenenfalls in Gegenwart eines inerten Lösungsmittels durchführt.

2. Verfahren nach Anspruch 1, dadurch gekennzeichnet, daß mindestens ein Rest R² der Rest -(CH₂)₃-OH ist.

3. Verfahren nach Anspruch 1, dadurch gekennzeichnet, daß mindestens ein Rest R² der Rest -(CH₂)₃-O-C₂H₄OH ist.

4. Verfahren nach Anspruch 1, dadurch gekennzeichnet, daß man als Epoxide Alkylenoxide mit 2 bis 4 Kohlenstoffatomen einsetzt.

5. Verfahren nach Anspruch 1, dadurch gekennzeichnet, daß man als Epoxide cycloaliphatische Epoxide einsetzt.

6. Verfahren nach Anspruch 1, dadurch gekennzeichnet, daß man als Epoxide Epoxyalkene der allgemeinen Formel 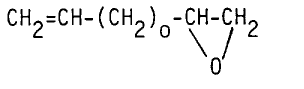 wobei o eine Zahl von 0 bis 8 ist, einsetzt.

7. Verfahren nach Anspruch 1, dadurch gekennzeichnet, daß man als Epoxide Epoxyalkenether der allgemeinen Formel 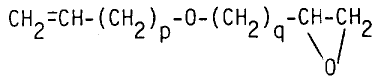 wobei p eine Zahl von 0 bis 4 und q eine Zahl von 1 bis 4 ist, einsetzt.

8. Verfahren nach Anspruch 7, dadurch gekennzeichnet, daß man Allylglycidether einsetzt.

9. Verfahren nach einem oder mehreren der vorhergehenden Ansprüche, dadurch gekennzeichnet, daß man als Katalysator BF₃ einsetzt.

## Claims

1. Process for the preparation of polyether-siloxanes, the polyether radicals of which are bonded to the polysiloxane skeleton by Si-C bonds, characterized in that polysiloxanes of the general average formula 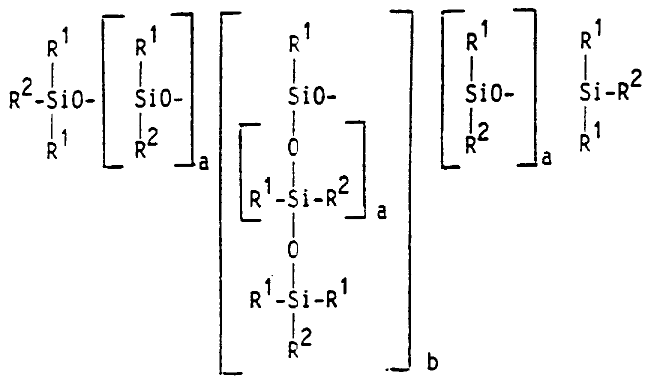 in which the radicals
R¹ are identical or different and are alkyl radicals having 1 to 4 carbon atoms or phenyl radicals, but at least 90 % of the radicals R¹ are methyl radicals,
R² can have the meaning of the radicals R¹, but at least one radical R² is a radical of the general formula 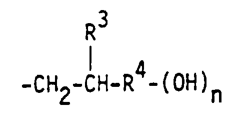 in which
R³ is a hydrogen or an alkyl radical having 1 to 4 carbon atoms,
R⁴ is an (n+1)-valent aliphatic hydrocarbon or ether radical and
n has a value of 1, 2 or 3,
a has a value from 1 to 1000 and
b has a value from 0 to 10,
are reacted with a compound containing at least one epoxide group in amounts such that at least two epoxide groups are present per one OH group, in the presence of Lewis acids at temperatures of ≼ 60°C and, if appropriate, the reaction is carried out in the presence of an inert solvent.

2. Process according to Claim 1, characterized in that at least one radical R² is the radical -(CH₂)₃-OH.

3. Process according to Claim 1, characterized in that at least one radical R² is the radical -(CH₂)₃-O-C₂H₄OH.

4. Process according to Claim 1, characterized in that alkylene oxides having 2 to 4 carbon atoms are employed as the epoxides.

5. Process according to Claim 1, characterized in that cycloaliphatic epoxides are employed as the epoxides.

6. Process according to Claim 1, characterized in that epoxy alkenes of the general formula 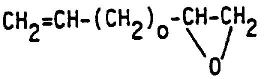 wherein o is a number from 0 to 8, are employed as the epoxides.

7. Process according to Claim 1, characterized in that epoxy alkene ethers cf the general formula 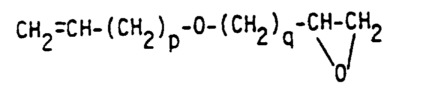 wherein p is a number from 0 to 4 and q is a number from 1 to 4, are employed as the epoxides.

8. Process according to Claim 7, characterized in that allyl glycidyl ether is employed.

9. Process according to one or more of the preceding claims, characterized in that BF₃ is employed as the catalyst.

## Revendications

1. Procédé de préparation de polyéthersiloxanes dont les radicaux polyéthers sont liés au tronc du polysiloxane par des liaisons Si-C, caractérisé en ce que l'on fait réagir des polysiloxanes de formule moyenne générale 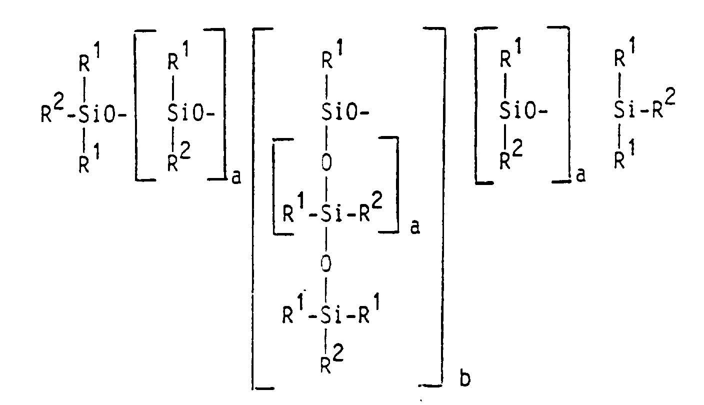 dans laquelle les radicaux
R¹ sont identiques ou différents et représentent des radicaux alkyle ayant 1 à 4 atomes de carbone ou des radicaux phényle, mais au moins 90% des radicaux R¹ sont des radicaux méthyle,
R² peuvent avoir la signification des radicaux R¹, mais au moins un radical R² est un radical de formule générale 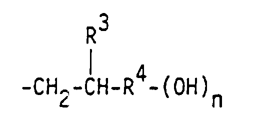 dans laquelle
R³ est un radical hydrogène ou un radical alkyle ayant 1 à 4 atomes de carbone,
R⁴ est un radical hydrocarbure aliphatique à valence (n+1) ou un radical éther, et
n a une valeur de 1, 2 ou 3,
a a une valeur de 1 à 1 000 et
b a une valeur de 0 à 10,
avec au moins un composé présentant un groupe époxyde en quantités telles qu'il y ait au moins deux groupes époxyde par groupe OH, en présence d'acides de Lewis à des températures ≼ 60°C, et on effectue éventuellement la réaction en présence d'un solvant inerte.

2. Procédé selon la revendication 1, caractérisé en ce qu'au moins un radical R² est le radical -(CH₂)₃-OH.

3. Procédé selon la revendication 1, caractérisé en ce qu'au moins un radical R² est le radical -(CH₂)₃-O-C₂H₄OH.

4. Procédé selon la revendication 1, caractérisé en ce que l'on utilise en tant qu'époxydes des alkylèneoxydes ayant 2 à 4 atomes de carbone.

5. Procédé selon la revendication 1, caractérisé en ce que l'on utilise en tant qu'époxydes des époxydes cycloaliphatiques.

6. Procédé selon la revendication 1, caractérisé en ce que l'on utilise en tant qu'époxydes des époxyalcènes de formule générale 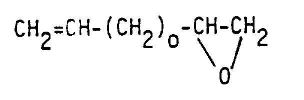 dans laquelle o est un nombre de 0 à 8.

7. Procédé selon la revendication 1, caractérisé en ce que l'on utilise en tant qu'époxydes des époxyalcèneéthers de formule générale 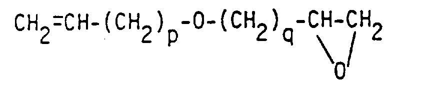 dans laquelle p est un nombre de 0 à 4 et q est un nombre de 1 à 4.

8. Procédé selon la revendication 7, caractérisé en ce que l'on utilise des allylglycidyléthers.

9. Procédé selon l'une ou plusieurs des revendications précédentes, caractérisé en ce que l'on utilise du BF₃ en tant que catalyseur.
